# FASCICULE DE BREVET EUROPEEN

(11) **EP 2 422 921 B1**
(45) Date de publication et mention de la délivrance du brevet: **06.03.2013**
(21) Numéro de dépôt: 11178170.4
(22) Date de dépôt: 19.08.2011
(51) Int. Cl.: B23P 19/02, F22B 37/00

(54) **Procédé et système de détubage, en particulier de condenseurs**
Verfahren und System zum Entfernen von Rohren, insbesondere von Kondensatoren
Method and system for removing tubes, in particular from condensers

(30) Priorité: 25.08.2010 FR 1056771
(43) Date de publication de la demande: 29.02.2012
(73) Titulaire: Eiffage Construction Metallique, 92700 Colombes (FR)
(72) Inventeur: Vuilleumier, David, 54840 GONDREVILLE (FR)
(74) Mandataire: Cabinet Plasseraud

(56) Documents cités:
- US-A- 3 857 158
- US-A- 4 044 444
- US-A- 5 293 682
- US-B1- 6 654 996

## Description

### DOMAINE DE L'INVENTION

La présente invention concerne le domaine du détubage, c'est-à-dire du retrait de tubes, d'appareils à tubes échangeurs de chaleur, et peut s'appliquer notamment au détubage des condenseurs de centrales thermiques ou nucléaires.

L'invention concerne plus particulièrement un procédé et un système de détubage, tube par tube, permettant d'obtenir des courts tronçons de tubes.

### ARRIERE-PLAN TECHNOLOGIQUE DE L'INVENTION

Le document US 5 293 682 divulgue un procédé et un dispositif de démontage, tube par tube, de tubes d'un appareil à faisceau de tubes tel qu'un condenseur selon les préambules des revendications 1 et 4.

Il est connu, par le document US5927885, une méthode de détubage, tube par tube, de condenseurs, dans lequel chaque tube échangeur de chaleur d'un faisceau de tubes est extrait de deux plaques à tubes, entre lesquelles les tubes s'étendent, par traction axiale sur le tube depuis l'une de ses extrémités saillante à l'extérieur de l'une des deux plaques, dites également plaques tubulaires. Au niveau d'un premier poste, des rouleaux cannelés appariés d'axes parallèles entre eux, et sensiblement perpendiculaires à l'axe du tube, et répartis de part et d'autre du tube sont mis en rotation de façon à accrocher, et aplatir le tube par pincement entre eux. La rotation en sens opposé des rouleaux cannelés déplace alors le tube par traction sensiblement axiale, de façon à l'amener à un deuxième poste équipé d'une lame fixe de découpe longitudinale du tube aplati, au niveau des deux plis latéraux du tube écrasé. Après la séparation en deux lames longitudinales du tube, une découpe transversale réalisée à l'aide d'une paire de rouleaux de cisaille au niveau d'un troisième poste permet d'obtenir des courts tronçons de lames, correspondant chacune à l'un des demi-tubes aplatis. Un des rouleaux du troisième poste présente une lame de cisaille pour permettre la découpe dans le sens transversal, par coopération avec une partie aménagée en enclume ou billot sur l'autre rouleau du troisième poste.

Un inconvénient de ce type de méthode est que la lame fixe de découpe du deuxième poste est en opposition par rapport au mouvement axial continu du tube, ce qui implique un effort mécanique plus important au niveau des rouleaux cannelés, avec des risques d'usure prématurée de la lame de découpe et de dysfonctionnement.

Il existe donc un besoin pour un système de détubage, tube par tube, peu encombrant, fonctionnant de manière satisfaisante, avec une cinématique relativement simple et qui minimise les risques d'usure prématurée.

### OBJETS DE L'INVENTION

La présente invention a notamment pour but de pallier tout ou partie de ces inconvénients en proposant un procédé de démontage, tube par tube, de tubes d'un appareil à faisceau de tubes, tel qu'un condenseur, comprenant les étapes consistant à :
- déplacer longitudinalement et extraire un tube engagé dans une plaque à tubes, par entraînement du tube sensiblement selon son axe entre deux organes de serrage rotatifs, tournant en sens opposés, le déplacement étant réalisé suivant l'axe longitudinal du tube qui s'étend dans un plan intermédiaire entre les deux organes de serrage ;
- serrer et déformer une portion du tube qui fait saillie en dehors de la plaque à tubes lors d'un engagement sur la paroi externe du tube des dents desdits deux organe de serrage ;
- maintenir fixement l'outillage monotube (la plaque tubulaire est fixe) pendant le serrage et la déformation du tube, pour permettre un déplacement relatif d'extraction du tube par rapport à la plaque à tubes ;
- découper, par déplacement d'au moins une lame de découpe mobile transversalement par rapport à l'axe du tube, une pluralité de tronçons de tube ayant subi la déformation ;
   caractérisé en ce que les deux organes de serrage sont désengagés du tube pendant la découpe. De la sorte, une découpe est effectuée pendant un arrêt momentané du déplacement axial du tube. Avantageusement, le désengagement des organes de serrage du tube est assuré par un écartement des deux organes de serrage par rapport au dit plan intermédiaire, peu avant ou simultanément à une découpe du tube.

On obtient ainsi un procédé qui minimise les risques de dysfonctionnement en combinant avantageusement la rotation continue des organes de serrage et une extraction axiale discontinue du tube avec de brèves phases d'arrêt au moment des découpes de ladite portion de tube déformée et extraite.

Un autre avantage du procédé de l'invention est qu'il peut fonctionner efficacement avec une cadence qui reste élevée, du fait que les mouvements d'écartement-rapprochement des organes de serrage et les mouvements d'abaissement-relèvement de ladite au moins une lame de découpe sont réalisés sensiblement et respectivement aux mêmes moments, par exemple en actionnant un mécanisme d'entraînement ou actionneur commun.

Selon une particularité de l'invention, on transmet un mouvement de rotation continue à chacun des organes de serrage en utilisant un arbre de transmission formant un pivot distant de l'axe de rotation respectif de chaque organe de serrage, l'écartement de chacun des deux organes de serrage par rapport au plan intermédiaire résultant de l'actionnement d'une rotation, de préférence d'un angle inférieur à 90°, d'un élément d'axe articulé autour du pivot. Ainsi, le système peut être compact et l'écartement des organes de serrage peut être obtenu avec un mécanisme d'entraînement qui ne nécessite pas d'arrêter la rotation des organes de serrage.

Par ailleurs, l'invention concerne également un système de démontage, tube par tube, de tubes d'un appareil à faisceau de tubes, tel qu'un condenseur, et dans lequel les tubes sont engagés dans une plaque à tubes, le système comprenant :
- une structure porteuse ;
- un premier poste comprenant deux organes de serrage dentés et rotatifs, adaptés pour tourner en sens opposés et dont les axes de rotation sont sensiblement parallèles entre eux, les deux organes de serrage délimitant entre eux un passage pour un tube d'axe longitudinal sensiblement perpendiculaire aux axes de rotation, et qui s'étend dans un plan longitudinal intermédiaire entre les deux organes de serrage, le tube étant déformé et entrainé axialement entre les dents desdits deux organes de serrage, de sorte à être extrait sensiblement axialement de la plaque à tubes;
- un deuxième poste comprenant au moins une lame de découpe mobile transversalement par rapport au plan longitudinal, pour découper un tube déformé transféré du premier au deuxième poste, en tronçons successifs ;
- des premiers moyens d'entraînement articulés par rapport à la structure porteuse pour entraîner ladite lame de découpe ;
- des deuxièmes moyens d'entraînement reliés à la structure porteuse pour entraîner en rotation les organes de serrage ;
   caractérisé en ce qu'il comprend au moins un actionneur pour déplacer lesdits premiers moyens d'entraînement entre une première position angulaire permettant, pendant le transfert de tube déformé, le maintien de ladite lame de coupe en retrait par rapport au tube déformé , et une deuxième position angulaire permettant la découpe de tube déformé et dans laquelle les deux organes de serrage sont écartés l'un de l'autre et par rapport au plan longitudinal de façon à se désengager d'un tube en cours d'extraction de la plaque à tubes.

Ainsi, on s'assure que le mouvement de la lame ne sera pas gêné par des forces s'exerçant sur le tube déformé en mouvement.

Dans divers modes de réalisation du système selon l'invention, on peut éventuellement avoir recours en outre à l'une et/ou à l'autre des dispositions suivantes :
- les premiers moyens d'entraînement sont actionnés par un même organe actionneur qui comprend de préférence un organe mobile en translation relié aux premiers moyens d'entraînement par une liaison pivot ;
- l'organe mobile de l'actionneur est mobile en translation dans le plan longitudinal intermédiaire et s'étend suivant une direction parallèle à un passage prévu pour le tube ;
- les premiers moyens d'entraînement présentent :
   - au moins un élément d'axe mobile en rotation par rapport à la structure porteuse ;
   - une première came solidaire en rotation de l'élément d'axe, permettant d'entraîner ladite lame de découpe en translation ; et
   - une deuxième came solidaire en rotation de l'élément d'axe et sollicitée par ledit actionneur ;
- ledit au moins un élément d'axe mobile comprend deux éléments d'axe qui présentent chacun une languette respective articulée autour d'un axe commun déplaçable en translation par l'actionneur ;
- les premiers moyens d'entraînement comprennent deux bras articulés supportant chacun un des deux organes de serrage respectifs, chacun des deux bras articulés étant solidaire en rotation d'un élément d'axe creux pivotant autour d'un arbre de transmission agencé pour transmettre un mouvement rotatif à l'organe de serrage correspondant ;
   - le deuxième poste comprend un bloc de cisaillage qui présente :
      - un dispositif à glissière agencé perpendiculairement par rapport au plan longitudinal ; et
      - deux lames guidées en translation par le dispositif à glissière ;
   - les premiers moyens d'entraînement présentent deux doigts chacun adapté pour s'engager avec un support de lame mobile avec une lame respective, le doigt s'étendant à travers un orifice dudit support de lame, chacun des doigts permettant d'entraîner la lame correspondante en fonction de la position angulaire des premiers moyens d'entraînement.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue de dessus en perspective d'un système de détubage selon l'invention, sans carter de protection ;
- la figure 2 est une autre vue en perspective du système de la figure 1, montrant une position d'écartement des bras articulés porteurs des organes rotatifs de serrage ;
- la figure 3 est une vue similaire à la figure 2, montrant une position rapprochée des bras articulés porteurs des organes rotatifs de serrage ;
- la figure 4 est une vue de dessus en perspective du système de la figure 1, tourné de 90° par rapport à la figure 1 pour faire apparaître le bloc de cisaillage ;
- la figure 5 représente un tronçon de tube déformé et coupé à l'aide du système de détubage de la figure 1 ;
- la figure 6 est une vue en perspective du système de la figure 1 qui montre la position de traction de tube et la position en retrait des lames de découpe du bloc de cisaillage ;
- la figure 7 est une vue en perspective du système de la figure 1 qui montre la position d'écartement des bras articulés et la position correspondante, en chevauchement, des lames de découpe ;
- les figures 8 et 9 sont des vues en perspective montrant un moteur d'entrainement en rotation des organes rotatifs du système de la figure 1 ;

- la figure 10 montre la transmission mécanique associée au moteur du système de la figure 1 ;
- les figures 11 et 12 montrent l'une par une vue en partie en transparence et l'autre par une vue en partie en transparence et en partie en coupe, la liaison pivot réalisée entre un axe de transmission du mécanisme d'entraînement d'un des organes rotatifs de serrage et un élément d'axe solidaire du bras articulé correspondant ;
- la figure 13 est une vue en perspective similaire à celle de la figure 7 avec une coupe longitudinale pour montrer le mécanisme d'entraînement des lames du bloc de cisaillage ;
- les figures 14 et 15 montrent les deux positions angulaires prises par les éléments d'axe du mécanisme d'entraînement des lames du bloc de cisaillage, en fonction de la position d'une chape du vérin d'actionnement; et
- la figure 16 est une vue similaire à la figure 2, montrant par transparence dans un des deux bras articulés une série d'engrenages de la chaine cinématique d'entrainement en rotation de l'un des organes de serrage.

### DESCRIPTION DES MODES DE REALISATION PREFERES DE L'INVENTION

Sur les différentes figures, les mêmes références désignent des éléments identiques ou similaires. Seule une extrémité d'un tube T est représentée dans les figures par souci de clarté. La portion du tube T représentée sur les figures est celle qui fait saillie par rapport à la plaque à tubes (non représentée) de l'appareil à faisceau de tubes tel qu'un condenseur.

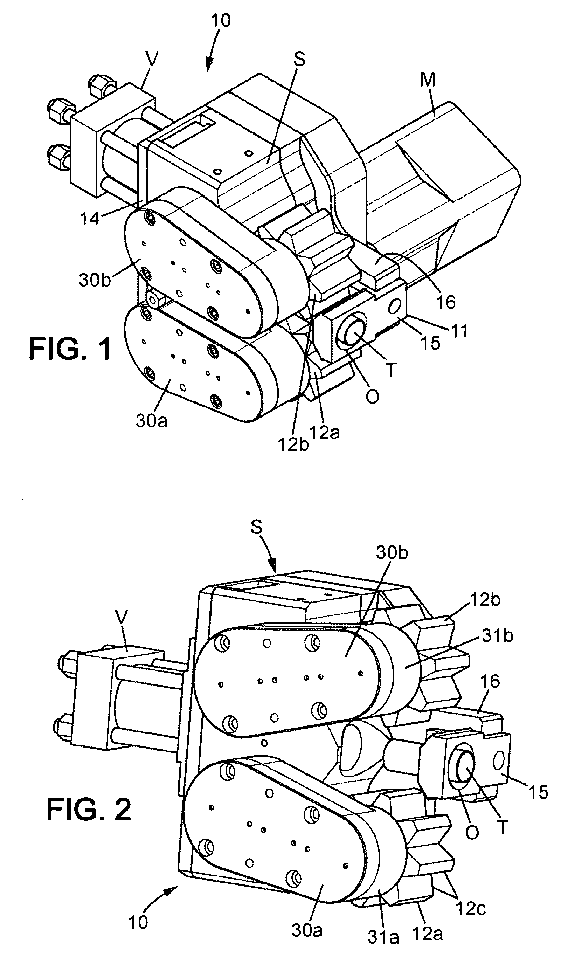

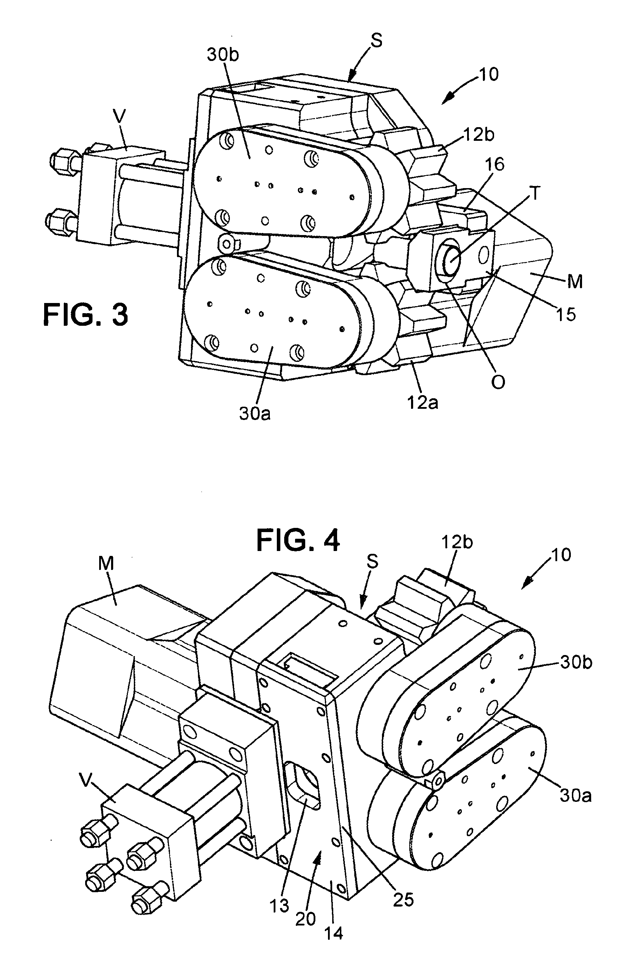

En référence aux figures 1 à 4, le système de détubage 10 pour le démontage, tube par tube, de tubes d'un condenseur présente une structure porteuse S, éventuellement portative qui comprend une première extrémité 11 avec une entrée, définie par exemple par une ouverture 0 circulaire axiale, par laquelle un tube T entre dans un premier poste de traction du tube T. Ce premier poste permet de tirer le tube selon son axe longitudinal par serrage avec déformation de ce tube T entre deux organes rotatifs de serrage afin d'extraire axialement le tube T hors de la plaque à tubes. En position initiale, le tube T est sorti d'une distance minimale (par exemple de l'ordre de 5-10 cm) en saillie à l'extérieur de la plaque à tubes et les organes de serrage 12a, 12b sont dans une position inactive, écartés l'un de l'autre et d'un passage longitudinal pour le transport du tube T. Le passage longitudinal s'étend depuis l'ouverture O jusqu'à un débouché axial 13 (visible sur la figure 4) défini au niveau d'une deuxième extrémité 14 de la structure porteuse S.

Au niveau de la première extrémité 11, il est prévu une plaque de butée 15 permettant d'appliquer le système 10 appuyé contre la plaque à tubes, dans le sens opposé à la traction, exercée sur le tube T pour l'extraire de la plaque à tubes, pendant le serrage avec déformation du tube T, pour permettre un déplacement relatif du tube T par rapport à la plaque à tubes. La butée 15 s'étend à la périphérie du passage longitudinal et peut, éventuellement, définir à l'aide d'un orifice ladite ouverture O. Comme cela est visible sur les figures 1 à 3, la butée 15 peut être raccordée à la structure porteuse S par l'intermédiaire d'un bras de support 16 parallèle au passage longitudinal et formant un "L" avec la butée.

En référence aux figures 4 et 6-7, la deuxième extrémité 14 de la structure porteuse S, située à l'opposé de la première extrémité 11, présente un bloc de cisaillage 20 qui forme un deuxième poste du système de détubage 10. Dans cet exemple, le bloc de cisaillage 20 comporte deux lames 21, 22 qui s'étendent transversalement par rapport à la direction axiale du tube T transporté à travers le passage longitudinal. Chacune des lames peut présenter un profil en U de façon à délimiter une ouverture circulaire ou ovale. La paire de lames 21, 22 se chevauche dans la position de découpe, et les lames 21, 22 peuvent coulisser à la façon d'une guillotine en étant guidées dans un dispositif à glissière 23 du bloc de cisaillage 20. Un compartiment parallélépipédique pour loger la paire de lames 21, 22 est défini entre une paroi interne 24 de la structure porteuse S, une paroi externe 25 parallèle à la paroi interne 24, et deux parois latérales 26, 27 de la structure porteuse S. La paroi interne 24 et la paroi externe 25 sont ici perpendiculaires au passage longitudinal et présentent des ouvertures coaxiales pour permettre l'avancée du tube T au-delà de la deuxième extrémité 14. Les lames 21, 22 sont donc mobiles transversalement par rapport au passage longitudinal.

Dans une variante de réalisation non représentée, le déplacement des lames 21, 22 peut ne pas être perpendiculaire au passage longitudinal. Selon une autre alternative, une ou plusieurs lames rotatives peuvent être déplacées en déplaçant, par exemple linéairement, leur axe de rotation. Plus généralement, on comprend que le bloc de cisaillage 20 formé à la deuxième extrémité 14 de la structure porteuse S peut utiliser une grande variété d'organes de découpe.

Comme cela est visible sur les figures 1-4 et 6-16, le système de détubage 10 présente, entre la première extrémité 11 et la deuxième extrémité 13, un dispositif de traction de tube qui est mobile entre une position inactive visible sur les figures 2, 7, 13 et 15 et une position active visible sur les figures 1, 3-4, 6, 11-12, 14 et 16. Les deux organes de serrage 12a, 12b, qui consistent par exemple en des pignons étoilés ou roues similaires pourvues de dents 12c, délimitent entre eux un passage de tube , dont l'axe longitudinal s'étend dans un plan longitudinal intermédiaire entre les deux organes de serrage 12a-12b. Les axes de rotation des organes de serrage 12a-12b sont ici parallèles entre eux et à ce plan longitudinal, et perpendiculaires à la direction de déplacement du tube T, quelle que soit la position des bras 30a, 30b de manoeuvre des organes de serrage 12a-12b. Dans la position inactive, le bras 30a de manoeuvre supérieur soulève l'organe de serrage 12a correspondant, tandis que le bras 30b de manoeuvre inférieur abaisse l'organe de serrage 12b associé. La position d'écartement des organes de serrage 12a-12b par rapport au plan longitudinal est alors maximale.

En référence aux figures 2 et 3, lors de la mise en route du système de détubage, les organes de serrage 12a-12b sont mis en rotation, en sens opposés, et les extrémités libres 31a-31b des bras 30a-30b de manoeuvre se rapprochent ensuite l'une de l'autre, de sorte que le mécanisme de serrage se referme sur le tube T (figure 3). On obtient alors la position active des organes rotatifs de serrage 12a et 12b. Dans l'exemple illustré, les bras de manoeuvre 30a-30b sont articulés chacun autour d'un axe respectif parallèle au plan longitudinal et perpendiculaire à la direction de déplacement du tube T. Ces axes d'articulation sont ici agencés dans une position intermédiaire entre le premier poste, de traction, où le tube T subit la déformation et le deuxième poste de cisaillage, où a lieu la découpe du tube T en tronçons successifs.

La forme et l'agencement des organes de serrages 12a et 12b (ici sous la forme de pignons dentés identiques) permet d'éviter le contact entre leurs dents, et il est prévu une alternance entre une disposition d'écrasement-déformation maximale du tube T, par des resserrements radiaux du tube T, séparés d'un pas, entre deux dents en vis-à-vis rapprochées et alignées avec les axes de rotation des organes de serrage 12a et 12b, et une disposition de moindre déformation dans laquelle deux intervalles entre les dents 12c se font face, les dents 12c en vis-à-vis n'étant plus dans l'alignement des axes de rotation.

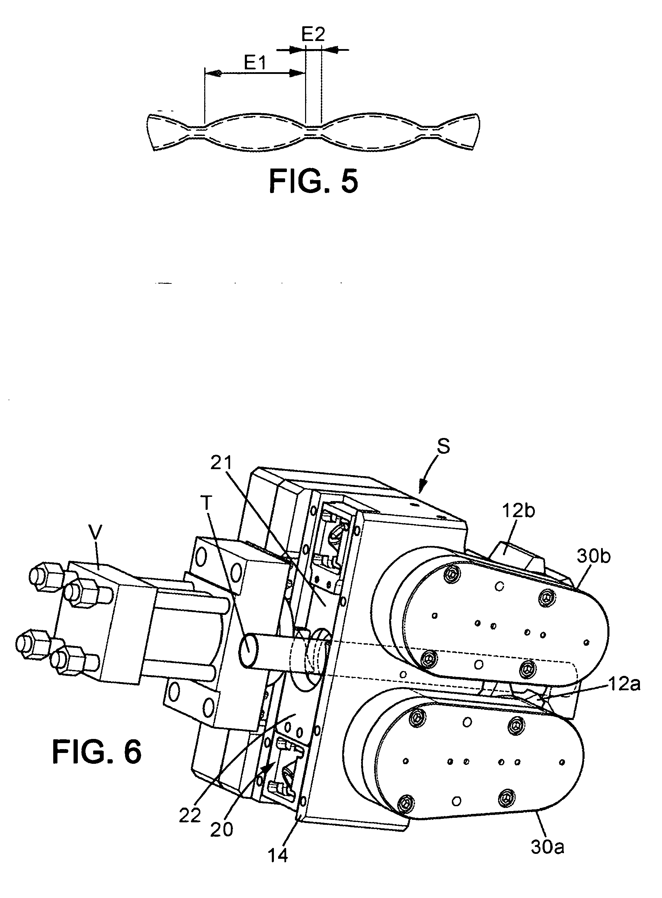

La figure 5 illustre le profil en coupe longitudinale d'un tronçon de tube extrait, obtenu à l'aide du système de détubage 10 des figures 1-4. La section du tube T déformé à l'aide des dents 12c des organes de serrages 12a-12b présente un écartement E1 entre deux zones consécutives de déformation maximale (section réduite au minimum) qui est très supérieur, par exemple au moins quatre fois supérieur, à l'écartement E2 entre deux bourrelets successifs du tube T. Cet écartement E2 correspond ici à l'épaisseur de l'extrémité des dents 12c des organes de serrage 12a-12b.

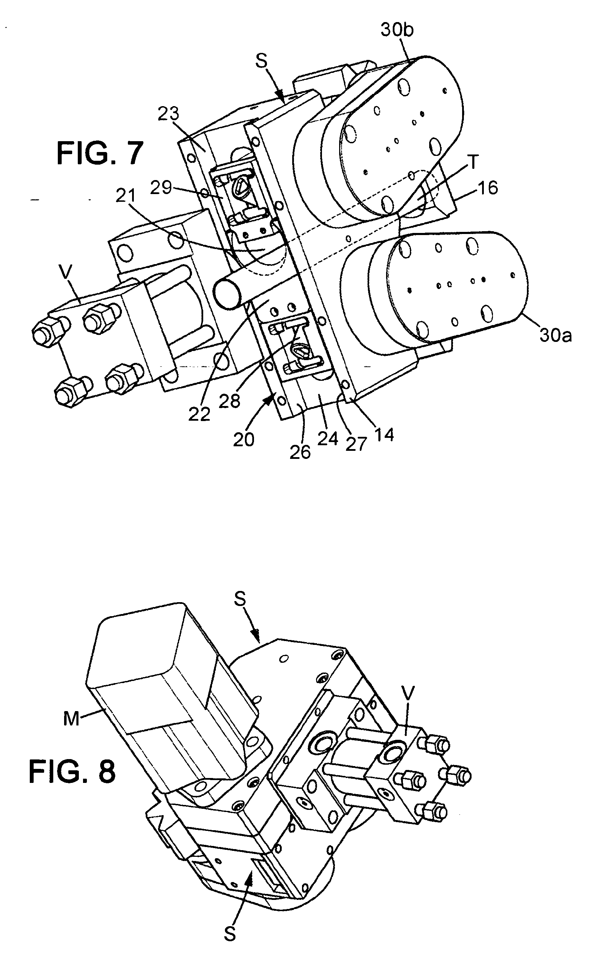

En référence plus particulièrement aux figures 6-7, on peut voir que le tube T a été tiré depuis la première extrémité 11 et traverse désormais le système, de façon à faire saillie de la deuxième extrémité 14. Par souci de simplification de la représentation, les déformations du tube T n'ont pas été représentées sur les figures 6-7. On peut voir sur ces figures 6 et 7 que l'actionneur utilisé pour commander le bloc de cisaillage 20, par exemple un vérin V, peut s'étendre suivant une direction parallèle à la direction de déplacement du tube T, de manière décalée sur un côté. Ici, il est prévu un vérin V qui s'étend par rapport au tube T à l'opposé des bras de manoeuvre 30a-30b.

En référence aux figures 1 et 8-10, le mécanisme de serrage permettant la traction du tube T comporte un moteur M, par exemple de type hydraulique, pour entraîner en rotation les organes de serrage 12a-12b. Le moteur M peut présenter un arbre moteur agencé à 90° par rapport à la tige du vérin V. Le moteur M est raccordé sur un côté de la structure porteuse S qui est à l'opposé du côté de raccordement des bras de manoeuvre 30a-30b.

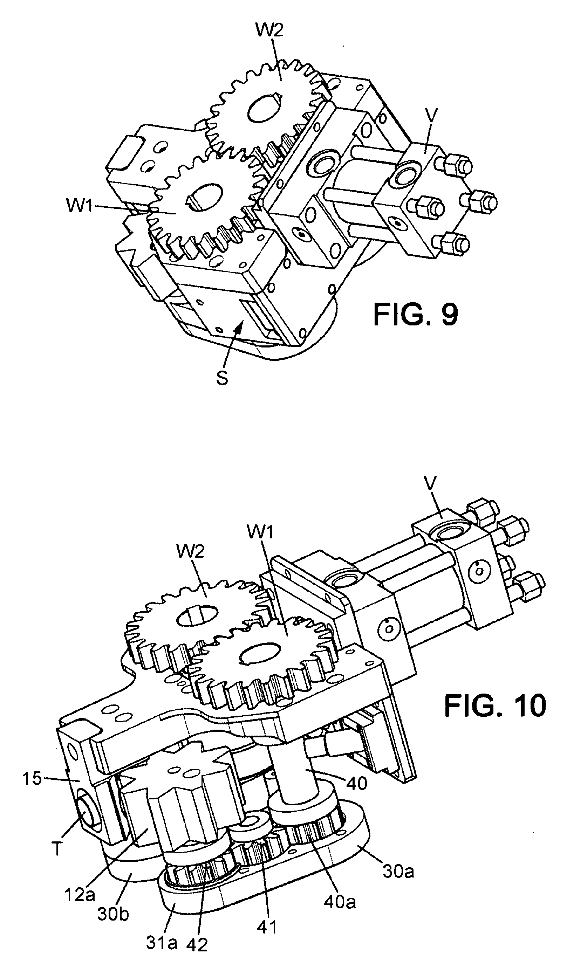

Le système primaire d'engrenage lié au moteur M présente deux roues dentées W1, W2 dont l'une est connectée au moteur M par un arbre de transmission (non représenté). Ce système primaire est agencé dans un carter adjacent au moteur M ; les deux roues dentées W1, W2 sont identiques et en prise l'une avec l'autre de sorte qu'elles tournent en sens opposés à la même vitesse pour entraîner l'une chacune un organe de serrage respectif 12a ou 12b. La figure 10 montre un arbre de transmission 40, qui s'étend perpendiculairement au bras de manoeuvre 30a associé, en reliant la roue dentée W1 connectée au moteur M à un pignon de moindre dimension qui s'engrène avec un autre pignon, pour obtenir le décalage des roues dentées par rapport à la structure de l'organe de serrage 12a. Un arbre de transmission analogue est relié à l'autre roue dentée W2.

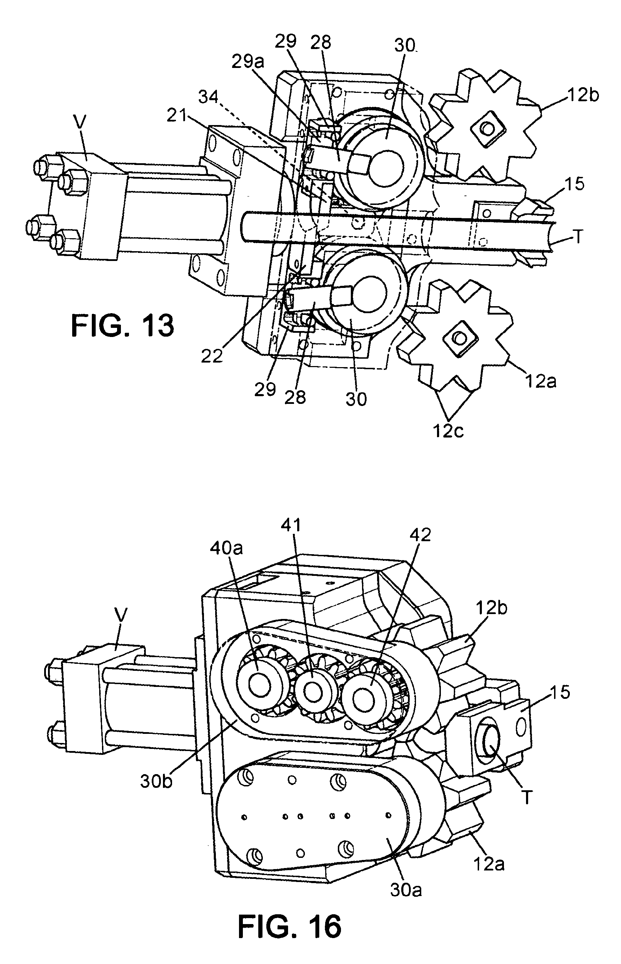

En référence aux figures 10, 12 et 16, du côté du bras de manoeuvre 30a, un ensemble d'engrenages est formé par les trois roues dentées suivantes en prise deux à deux: la roue dentée 40a solidaire en rotation de l'arbre de transmission 40, et en prise avec la roue dentée intermédiaire 41, elle-même en prise avec la roue dentée terminale 42, agencée au niveau de l'extrémité libre 31a du bras de manoeuvre 30a associé. Cette roue dentée terminale 42 est solidaire en rotation de l'organe de serrage 12aassocié. Une chaine cinématique à 3 roues dentées identiques aux roues 40a, 41 et 42 est montée, de la même manière dans le bras de manoeuvre 30b, pour entrainer en rotation l'organe de serrage 12b à partir de l'autre roue dentée W2, en sens opposé et à la même vitesse que l'organe de serrage 12a (voir figure 16). Ce système de transmission permet d'obtenir une rotation des organes de serrage 12a-12b de manière indépendante du fonctionnement du mécanisme d'entraînement des lames 21, 22, qui va être décrit ci-après.

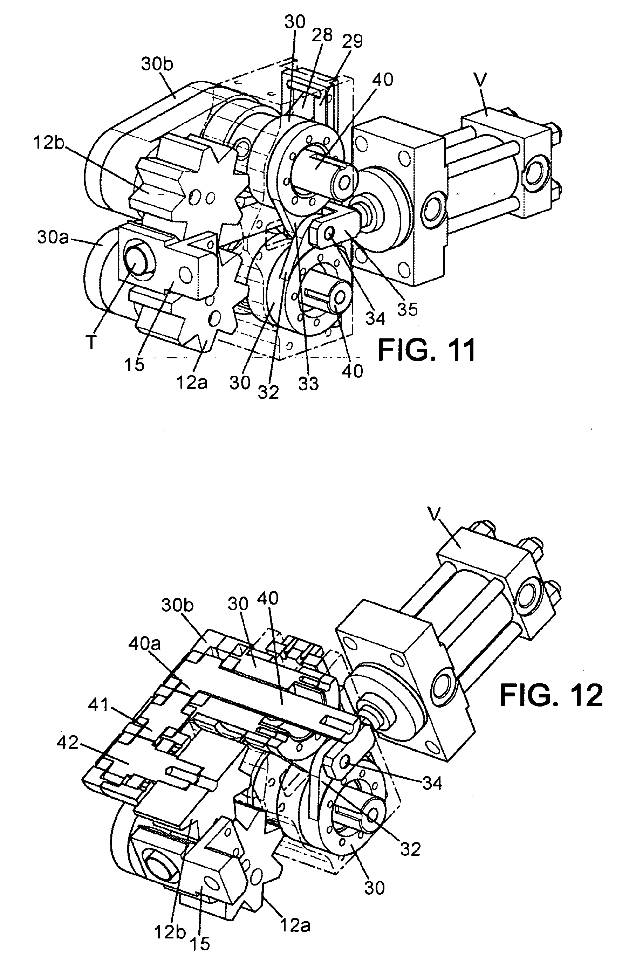

Dans un mode de réalisation préféré de l'invention, on prévoit des moyens d'entraînement articulés par rapport à la structure porteuse S pour entraîner les lame 21, 22 de découpe. Ces moyens d'entraînement comprennent ici des éléments d'axe 30 rotatifs (voir figures 11-12) dont la rotation est commandée par l'actionneur, ici un vérin V. Comme cela est visible sur les figures 11 à 15, ces moyens d'entraînement opèrent de manière synchronisée avec les bras de manoeuvre 30a-30b utilisés pour écarter du tube T les organes de serrage 12a-12b. Pour cela, ces moyens d'entraînement peuvent être solidaires en rotation des bras de manoeuvre 30a-30b, par exemple par une liaison d'encastrement. De préférence, une liaison permet au vérin V ou actionneur analogue de déplacer les moyens d'entraînement entre deux positions angulaires. La première de ces positions angulaires correspond à la position de fermeture du mécanisme de serrage (rapprochement des bras 30a et 30b l'un de l'autre, et serrage du tube T entre les organes de serrage 12a et 12b), permettant un transfert du tube T de la première extrémité 11 vers la deuxième extrémité 14, et sa déformation entre les organes de serrage (12a, 12b) tout en maintenant ladite lame de coupe dans une position en retrait par rapport au tube T. Pour cette première position angulaire, les bras de manoeuvre 30a-30b sont resserrés comme montré sur la figure 6. Dans la deuxième position angulaire, les bras de manoeuvre 30a-30b sont écartés au contraire, de façon à ce que les deux organes de serrage 12a-12b soient écartés par rapport à l'axe de déplacement du tube T et désengagés du tube. Dans cette deuxième position angulaire et comme représenté à la figure 7, les moyens d'entraînement déplacent les lames 21, 22 pour permettre la découpe de la partie du tube déformé qui fait saillie de la deuxième extrémité 14 de la structure porteuse S.

Les moyens d'entraînement des lames 21, 22 sont plus particulièrement décrits en référence aux figures 11, 12 et 13. On peut voir ainsi que les bras de manoeuvre 30a-30b sont chacun rendu solidaire en rotation d'un élément d'axe 30, qui est ici logé à l'intérieur d'un carter de la structure porteuse S. Chaque élément d'axe 30 est dans une position intermédiaire entre la zone de traction et la zone de découpe. Les éléments d'axe 30 sont par exemple creux pour pouvoir pivoter chacun autour d'un axe de support, qui est un arbre de transmission 40 respectif. Ces éléments d'axe 30 forment avantageusement une partie des moyens d'entraînement des lames 21, 22 pour permettre la découpe. Dans l'exemple illustré, chacun des éléments d'axe 30 est mobile en rotation par rapport à la structure porteuse S et solidaire en rotation à la fois d'une première came permettant d'entraîner l'une respectivement des lames 21, 22 en translation, et d'une deuxième came sollicitée par le vérin V ou actionneur analogue. On réalise ici la première came sous la forme d'une languette ou d'un doigt 28 pouvant s'engager dans un support de lame 29 qui est mobile avec la lame 21 ou 22 correspondante. Les deux doigts 28 sont par exemple agencés à l'aplomb du passage longitudinal pour le tube T.

En référence à la figure 13, ce doigt 28, vissé dans un alésage radial de l'élément d'axe 30 correspondant, correspond à une projection qui s'étend en saillie radiale depuis la face externe sensiblement cylindrique de l'élément d'axe 30, et traverse un orifice 29a du support de lame 29, cet orifice 29a étant aménagé en fourchette à deux dents cylindriques de petit diamètre entre lesquelles le doigt 28 est engagé et peut venir en butée contre l'une ou l'autre des deux dents. Le doigt 28 peut ainsi prendre appui contre une dent supérieure ou inférieure de l'orifice 29a, de façon à entraîner respectivement la remontée ou l'abaissement de la lame 21 ou 22 associée. Les lames 21, 22 sont faiblement décalées axialement l'une par rapport à l'autre et peuvent ainsi se chevaucher en coulissant l'une contre l'autre, perpendiculairement à l'axe du tube T déformé. Comme cela est visible sur la figure 13, chacun des doigts 28 permet d'entraîner la lame 21 ou 22 correspondante en fonction de la position angulaire des moyens d'entraînement.

Plus précisément, la position angulaire de chacun des éléments d'axe 30 dépend de la position angulaire, autour de l'arbre 40 correspondant, de la languette 32 ou 33 solidaire en rotation d'un élément d'axe rotatif 30 correspondant sur lequel cette languette 32 ou 33 est en saillie radiale externe, et qui forme une deuxième came distincte de la première came pour les moyens d'entraînement des lames 21, 22. En référence aux figures 11 et 12, deux éléments d'axe 30 présentent ainsi chacun une languette 32 ou 33 respective, articulée autour d'un même axe 34 solidaire d'une chape 35 du vérin V. Dans un mode de réalisation non limitatif, une unité de contrôle du vérin V permet de commander l'arrêt de l'opération de serrage avec déformation du tube T de manière cyclique. Par exemple, après une période prédéterminée de détubage, l'unité de contrôle commande ainsi, simultanément l'écartement des organes de serrage 12a-12b du tube T, donc l'arrêt momentané de l'extraction du tube T hors de la plaque à tubes, et la découpe du tube T au niveau du bloc de cisaillage 20. Un avantage de ce type de commande est que la longueur de tube découpée peut être ajustée. Alternativement ou en complément, la commande du vérin V peut être aussi manuelle.

Comme cela est visible sur la figure 12, l'élément d'axe 30 pivote, dans cet exemple non limitatif, autour de l'arbre de transmission 40, dont une extrémité, qui fait saillie par rapport à l'élément d'axe 30 creux, forme la roue dentée 40a. On comprend donc qu'on intègre de manière coaxiale deux arbres rotatifs 30, 40 entraînés de manière différente. On peut transmettre un mouvement de rotation continue à même vitesse et en sens opposés aux organes de serrage 12a et 12b en utilisant les arbres de transmission 40 comme pivots pour les éléments d'axe 30 creux, ces pivots étant distants des axes de rotation des organes de serrage 12b et 12b.

Le système de détubage 10 peut être utilisé dans un procédé qui comprend les étapes consistant à :
- mettre en rotation en sens opposés les deux organes de serrage rotatifs 12a et 12b ;
- déplacer longitudinalement le tube T par traction entre les deux organes de serrage rotatifs 12a-12b tournant en sens opposés, le déplacement du tube T étant réalisé de sorte que son axe longitudinal s'étend dans un plan longitudinal intermédiaire entre les deux organes de serrage 12a-12b ;
- serrer et déformer une portion de ce tube T, par des resserrements radiaux du tube, pas à pas, par engagements successifs sur la paroi externe du tube T des dents 12c des organes de serrage 12a-12b ;
- découper des tronçons de tube ayant subi la déformation, par une ou deux lames de découpe 21, 22 transversalement mobile(s) ; et
- actionner sensiblement simultanément l'écartement des deux organes de serrage 12a-12b et la découpe par rapport audit plan longitudinal intermédiaire, par exemple par le vérin V, de façon à ce que les deux organes de serrage 12a-12b soient désengagés du tube T pendant la découpe de ce tube T.

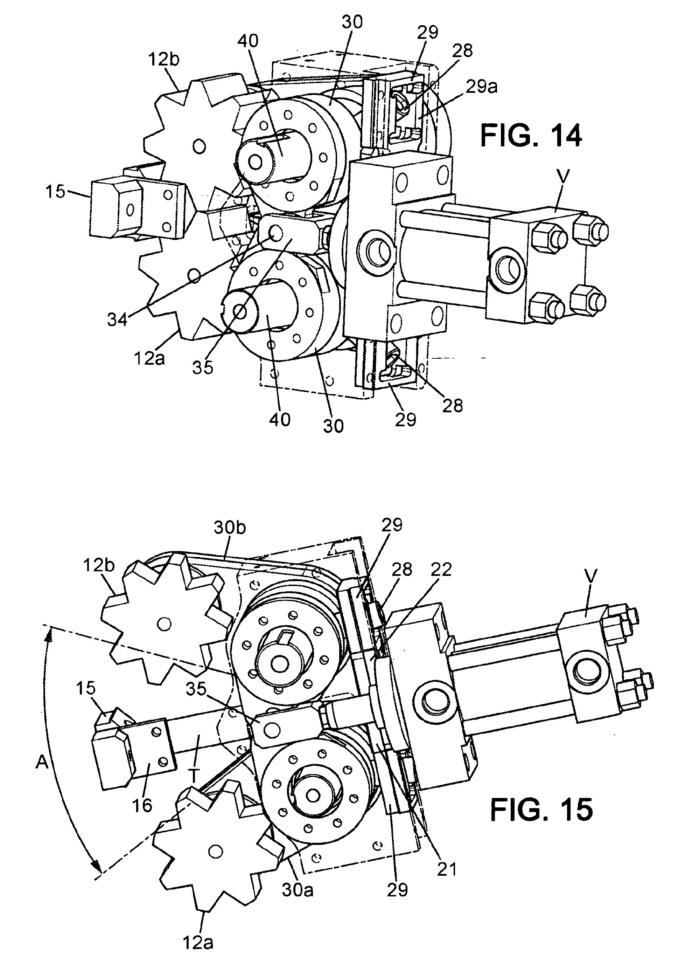

En référence aux figures 14 et 15, l'organe mobile de l'actionneur, ici la chape 35 du vérin V, se déplace dans le sens opposé au déplacement du tube T pour actionner la découpe. Pour des raisons d'encombrement en hauteur, l'espacement entre les éléments d'axe 30 est très inférieur au diamètre de l'un des éléments d'axe 30.

La sortie de la tige de vérin V commande ainsi l'écartement des organes de serrage 12a-12b, restant entrainés en rotation, et le coulissement des lames de coupe 21 et 22 en position de coupe, tandis que la rentrée de la tige de vérin V commande le rapprochement des organes de serrage 12a-12b en position de serrage-déformation en boudin et entrainement axial du tube T, et le retour des lames 21 et 22 en position écartée du tube déformé (position de repos de la cisaille).

Toujours en référence aux figures 14 et 15, l'écartement de chacun des deux organes de serrage 12a-12b par rapport au plan longitudinal intermédiaire est obtenu par l'actionnement d'une rotation d'un angle inférieur à 90° de chacun des éléments d'axe 30 articulés. Cet angle de rotation peut être compris entre 20° et 50° par exemple, de manière à limiter la course des lames 21, 22 et à minimiser l'angle d'ouverture des organes de serrages 12a-12b. On peut voir ainsi que l'angle d'ouverture A montré dans l'exemple non limitatif de la figure 15 est sensiblement inférieur à 90°.

Pour chacun des éléments d'axe 30, l'écart angulaire respectif entre les directions générales du bras de manoeuvre 30a ou 30b, de la languette 32 ou 33 et le doigt 28 d'engagement est de préférence d'au moins 80° et ne dépasse pas 180°. L'écart angulaire entre le bras de manoeuvre et le doigt 28 d'engagement est ici compris entre 120 et 180°.

Un avantage des moyens d'entraînement des lames 21, 22 décrits ci-dessus est qu'il n'est pas nécessaire d'ajouter des articulations distinctes des articulations des bras de manoeuvre 30a, 30b. Ceci permet de simplifier la structure du système de détubage 10. Un seul vérin V permet ainsi d'écarter et rapprocher les organes de serrage rotatifs 12a-12b du tube T et d'actionner le bloc de cisaillage 20.

Il est évident pour les personnes du métier que la présente invention permet des modes de réalisation sous de nombreuses autres formes spécifiques sans s'éloigner du domaine d'application de l'invention comme revendiqué. Par exemple, bien que le système de détubage a été décrit comme présentant un bloc de cisaillage à deux lames 21, 22, il peut bien entendu utiliser une seule lame.

Le système de l'invention peut avantageusement être mis en oeuvre par un opérateur sous la forme d'un dispositif portable, manipulable manuellement, par exemple comme une tronçonneuse, et qu'un opérateur peut appliquer contre une plaque à tubes, par exemple d'un condenseur, pour en extraire et découper successivement les tubes, tube par tube.

## Revendications

1. Procédé de démontage, tube par tube, de tubes d'un appareil à faisceau de tubes, tel qu'un condenseur, comprenant les étapes consistant à :
- déplacer longitudinalement et extraire un tube (T) engagé dans une plaque à tubes, par entraînement du tube, sensiblement selon son axe, entre deux organes de serrage (12a, 12b) rotatifs tournant en sens opposés, le déplacement étant réalisé suivant l'axe longitudinal du tube qui s'étend dans un plan intermédiaire entre les deux organes de serrage ;
- serrer et déformer une portion du tube qui fait saillie en dehors de la plaque à tubes lors d'un engagement sur la paroi externe du tube de dents (12c) desdits deux organe de serrage ;
- maintenir fixement l'outillage monotube pendant le serrage et la déformation du tube, pour permettre un déplacement relatif d'extraction du tube par rapport à la plaque à tubes ;
- découper, par déplacement d'au moins une lame (21, 22) de découpe mobile transversalement par rapport à l'axe du tube, une pluralité de tronçons de tube ayant subi la déformation ;
**caractérisé en ce que** les deux organes de serrage (12a, 12b) sont désengagés du tube (T) pendant la découpe.

2. Procédé selon la revendication 1, dans lequel le désengagement des organes de serrage (12a, 12b) du tube (T) est assuré par un écartement des deux organes de serrage (12a, 12b) par rapport audit plan intermédiaire, peu avant ou simultanément à une découpe du tube (T).

3. Procédé selon l'une quelconque des revendications 1 et 2, dans lequel on transmet un mouvement de rotation continue à chacun des organes de serrage (12a, 12b) en utilisant un arbre de transmission (40) formant un pivot distant de l'axe de rotation respectif de chaque organe de serrage, l'écartement de chacun des deux organes de serrage (12a, 12b) par rapport au plan intermédiaire résultant de l'actionnement d'une rotation, de préférence d'un angle inférieur à 90°, d'un élément d'axe (30) articulé autour du pivot.

4. Système (10) de démontage, tube par tube, de tubes d'un appareil à faisceau de tubes, tel qu'un condenseur et dans lequel les tubes sont engagés dans une plaque à tubes, le système comprenant :
- une structure porteuse (S) ;
- un premier poste comprenant deux organes de serrage dentés et rotatifs (12a, 12b), adaptés pour tourner en sens opposés, et dont les axes de rotation sont sensiblement parallèles entre eux, les deux organes de serrage délimitant entre eux un passage pour un tube (T) d'axe longitudinal sensiblement perpendiculaire aux axes de rotation, et qui s'étend dans un plan longitudinal intermédiaire entre les deux organes de serrage, le tube (T) étant déformé et entrainé axialement entre les dents des deux organes des serrage, de sorte à être extrait sensiblement axialement de la plaque à tubes ;
- un deuxième poste comprenant au moins une lame de découpe (21, 22) mobile transversalement par rapport au plan longitudinal, pour découper un tube déformé, transféré du premier au deuxième poste, en tronçons successifs ;
- des premiers moyens d'entraînement (28, 30) articulés par rapport à la structure porteuse (S) pour entraîner ladite lame de découpe (21, 22) ;
- des deuxièmes moyens d'entraînement (40, 40a, 41, 42) reliés à la structure porteuse (S) pour entraîner en rotation les organes de serrage (12a, 12b) ;
**caractérisé en ce qu'**il comprend au moins un actionneur (V) pour déplacer lesdits premiers moyens d'entraînement (28, 30) entre une première position angulaire permettant, pendant le transfert de tube déformé, le maintien de ladite lame de coupe (21, 22) en retrait par rapport au tube déformé, et une deuxième position angulaire permettant la découpe de tube déformé et dans laquelle les deux organes de serrage (12a, 12b) sont écartés l'un de l'autre et par rapport au plan longitudinal de façon à se désengager d'un tube en cours d'extraction de la plaque à tubes.

5. Système selon la revendication 4, dans lequel les premiers moyens d'entraînement (28, 30) sont actionnés par un même organe actionneur (34, V) qui comprend de préférence un organe (35) mobile en translation relié aux premiers moyens d'entraînement par une liaison pivot (34).

6. Système selon la revendication 5, dans lequel l'organe (35) mobile de l'actionneur (34, V) est mobile en translation dans le plan longitudinal intermédiaire et s'étend suivant une direction parallèle à un passage prévu pour le tube (T).

7. Système selon l'une quelconque des revendications 4 à 6, dans lequel les premiers moyens d'entraînement (28, 30) présentent :
- au moins un élément d'axe (30) mobile en rotation par rapport à la structure porteuse (S) ;
- une première came solidaire en rotation de l'élément d'axe, permettant d'entraîner ladite lame (21, 22) de découpe en translation ; et
- une deuxième came solidaire en rotation de l'élément d'axe et sollicitée par ledit actionneur (34, V).

8. Système selon la revendication 7, dans lequel ledit au moins un élément d'axe mobile (30) comprend deux éléments d'axe qui présentent chacun une languette (32, 33) respective articulée autour d'un axe commun (34) déplaçable en translation par l'actionneur (V).

9. Système selon l'une quelconque des revendications 4 à 8, dans lequel les premiers moyens d'entraînement comprennent deux bras (30a, 30b) articulés supportant chacun un des deux organes de serrage (12a, 12b)respectifs, chacun des deux bras articulés étant solidaire en rotation d'un élément d'axe (30) creux pivotant autour d'un arbre de transmission (40) agencé pour transmettre un mouvement rotatif à l'organe de serrage correspondant.

10. Système selon l'une quelconque des revendications 4 à 9, dans lequel le deuxième poste comprend un bloc de cisaillage (20) qui présente :
- un dispositif à glissière (23) agencé perpendiculairement par rapport au plan longitudinal ; et
- deux lames (21, 22) guidées en translation par le dispositif à glissière (23).

11. Système selon la revendication 10, dans lequel les premiers moyens d'entraînement (28, 30) présentent deux doigts (28) chacun adapté pour s'engager avec un support de lame (29) mobile avec une lame respective (21, 22), le doigt (28) s'étendant à travers un orifice (29a) dudit support de lame, chacun des doigts permettant d'entraîner la lame correspondante en fonction de la position angulaire des premiers moyens d'entraînement (28, 30).

## Claims

1. Method of dismantling tubes, tube by tube, from an apparatus incorporating a bundle of tubes, such as a condenser, comprising the steps consisting of:
- longitudinally displacing and extracting a tube (T) engaged in a tube plate by driving the tube, substantially along its axis, between two rotating clamping elements (12a, 12b) rotating in opposite directions, the displacement being effected along the longitudinal axis of the tube which extends in an intermediate plane between the two clamping elements;
- clamping and deforming a portion of the tube projecting out beyond the tube plate whilst teeth (12c) of said two clamping elements are engaged on the external wall of the tube;
- fixedly holding the mono-tube tool whilst clamping and deforming the tube to enable a relative extraction movement of the tube relative to the tube plate;
- cutting a plurality of tube lengths which have undergone deformation by displacing at least one cutting blade (21, 22) displaceable transversely to the axis of the tube;
**characterised in that** the two clamping elements (12a, 12b) are disengaged from the tube(T) during cutting.

2. Method as claimed in claim 1, in which the clamping elements (12a, 12b) are disengaged from the tube (T) by moving the two clamping elements (12a, 12b) apart relative to said intermediate plane just before or at the same time as cutting the tube (T).

3. Method as claimed in any one of claims 1 and 2, in which a continuous rotating movement is transmitted to each of the clamping elements (12a, 12b) using a transmission shaft (40) forming a pivot at a distance from the respective axis of rotation of each clamping element, the action of moving each of the two clamping elements (12a, 12b) apart relative to the intermediate plane resulting from a rotation of a shaft element (30) articulated about the pivot, preferably by an angle of less than 90°.

4. System (10) for dismantling tubes, tube by tube, from an apparatus incorporating a bundle of tubes, such as a condenser, and in which the tubes are engaged in a tube plate, which system comprises:
- a carrier structure (S);
- a first station comprising two rotating and toothed clamping elements (12a, 12b) designed to rotate in opposite directions, the axes of rotation of which are substantially parallel with one another, the two clamping elements bounding between them a passage for a tube (T) with a longitudinal axis substantially perpendicular to the axes of rotation and which extend in an intermediate longitudinal plane between the two clamping elements, the tube (T) being deformed and driven axially between the teeth of the two clamping elements so as to be extracted substantially axially from the tube plate;
- a second station comprising at least one cutting blade (21, 22) displaceable transversely to the longitudinal plane for cutting a deformed tube transferred from the first to the second station into successive lengths;
- first driving means (28, 30) articulated relative to the carrier structure (S) for driving said cutting blade (21, 22);
- second driving means (40, 40a, 41, 42) connected to the carrier structure (S) for driving the clamping elements (12a, 12b) in rotation;
**characterised in that** it comprises at least one actuator (V) for displacing said first driving means (28, 30) between a first angular position enabling said cutting blade (21, 22) to be held retracted relative to the deformed tube whilst the deformed tube is being transferred and a second angular position enabling the deformed tube to be cut and in which the two clamping elements (12a, 12b) are moved apart from one another and such relative to the longitudinal plane that they are disengaged from a tube during the process of extraction from the tube plate.

5. System as claimed in claim 4, in which the first driving means (26, 30) are actuated by a same actuator element (34, V) which preferably comprises an element (35) displaceable in translation connected to the first driving means by a pivot link (34).

6. System as claimed in claim 5, in which the displaceable element (35) of the actuator (34, V) is displaceable in translation in the intermediate longitudinal plane and extends along a direction parallel with a passage provided for the tube (T).

7. System as claimed in any one of claims 4 to 6, in which the first driving means (28, 30) comprise:
- at least one shaft element (30) displaceable in rotation relative to the carrier structure (S);
- a first cam which rotates in unison with the shaft element enabling said cutting blade (21, 22) to be driven in translation; and
- a second cam which rotates in unison with the shaft element and biased by said actuator (34, V).

8. System as claimed in claim 7, in which said at least one displaceable shaft element (30) comprises two shaft elements, each of which has a respective tongue (32, 33) articulated about a common shaft (34) displaceable in translation by the actuator (V).

9. System as claimed in any one of claims 4 to 8, in which the first driving means comprise two articulated arms (30a, 30b), each supporting one of the two respective clamping elements (12a, 12b), each of the two articulated arms rotating in unison with a hollow shaft element (30) pivoting about a transmission shaft (40) disposed so as to transmit a rotating movement to the corresponding clamping element.

10. System as claimed in any one of claims 4 to 9, in which the second station comprises a shearing block (20) comprising:
- a device (23) with a slide disposed perpendicular to the longitudinal plane; and
- two blades (21, 22) guided in translation by the slide device (23).

11. System as claimed in claim 10, in which the first driving means (28, 30) have two fingers (28), each designed to engage with a displaceable blade support (29) with a respective blade (21, 22), the finger (28) extending through an orifice (29a) of said blade support, each of the fingers enabling the corresponding blade to be driven as a function of the angular position of the first driving means (28, 30).

## Patentansprüche

1. Verfahren zur Demontage von Rohren eines Geräts mit Rohrbündel, wie beispielsweise eines Kondensators, Rohr für Rohr, umfassend die folgenden Schritte, darin bestehend:
- ein Rohr (T), das in einer Rohrplatte im Eingriff steht, längs zu verschieben und zu entnehmen, wobei das Rohr im Wesentlichen entlang seiner Achse zwischen zwei rotierenden Klemmelementen (12a, 12b), die sich in entgegengesetzte Richtungen drehen, angetrieben wird, wobei die Verschiebung entlang der Längsachse des Rohrs erfolgt, die sich in einer Zwischenebene zwischen den beiden Klemmelementen erstreckt;
- einen Abschnitt des Rohrs, der aus der Rohrplatte herausragt, festzuklemmen und zu verformen, wenn Zähne (12c) der beiden Klemmelemente an der äußeren Wand des Rohrs in Eingriff gelangen;
- das einrohrige Werkzeug während des Festklemmens und der Verformung des Rohrs festzuhalten, um eine relative Verschiebung zur Entnahme des Rohrs in Bezug zur Rohrplatte zu ermöglichen;
- durch Verschieben mindestens eines Schneidblattes (21, 22), das quer in Bezug zur Achse des Rohrs beweglich ist, eine Vielzahl von Rohrabschnitten, die einer Verformung unterzogen wurden, abzuschneiden;
**dadurch gekennzeichnet, dass** die beiden Klemmelemente (12a, 12b) während des Schneidens vom Rohr (T) losgelöst sind.

2. Verfahren nach Anspruch 1, bei dem das Loslösen der Klemmelemente (12a, 12b) vom Rohr (T) durch eine Entfernung der beiden Klemmelemente (12a, 12b) von der Zwischenebene etwas vor oder gleichzeitig mit einem Schneiden des Rohrs (T) erfolgt.

3. Verfahren nach einem der Ansprüche 1 und 2, bei dem eine kontinuierliche Drehbewegung an jedes der Klemmelemente (12a, 12b) übertragen wird, wobei eine Übertragungswelle (40) verwendet wird, die einen von der jeweiligen Drehachse jedes Klemmelements entfernten Zapfen bildet, wobei die Entfernung jedes der beiden Klemmelemente (12a, 12b) von der Zwischenebene aus der Durchführung einer Drehung, vorzugsweise um einen Winkel unter 90°, durch ein um den Zapfen angelenktes Achselement (30) resultiert.

4. System (10) zur Demontage von Rohren eines Geräts mit Rohrbündel, wie eines Kondensators, Rohr für Rohr, bei dem die Rohre in einer Rohrplatte in Eingriff stehen, wobei das System Folgendes umfasst:
- eine Tragstruktur (S);
- eine erste Station, umfassend zwei gezahnte und rotierende Klemmelemente (12a, 12b), die dazu vorgesehen sind, sich in entgegengesetzte Richtungen zu drehen, und deren Drehachsen im Wesentlichen zueinander parallel sind, wobei die beiden Klemmelemente zwischen sich einen Durchgang für ein Rohr (T) mit einer Längsachse begrenzen, die im Wesentlichen auf die Drehachsen senkrecht ist und sich in einer Zwischenlängsebene zwischen den beiden Klemmelementen erstreckt, wobei das Rohr (T) axial zwischen den Zähnen der beiden Klemmelemente verformt und angetrieben wird, so dass es im Wesentlichen axial aus der Rohrplatte entnommen wird;
- eine zweite Station, umfassend mindestens ein quer zur Längsebene bewegliches Schneidblatt (21, 22), um ein verformtes, von der ersten zur zweiten Station weitergeleitetes Rohr in aufeinanderfolgende Abschnitte zu schneiden;
- erste Antriebsmittel (28, 30), die in Bezug zur Tragstruktur (S) angelenkt sind, um das Schneidblatt (21, 22) anzutreiben;
- zweite Antriebsmittel (40, 40a, 41, 42), die mit der Tragstruktur (S) verbunden sind, um die Klemmelemente (12a, 12b) in Drehung anzutreiben;
**dadurch gekennzeichnet, dass** es mindestens ein Betätigungselement (V) umfasst, um die ersten Antriebsmittel (28, 30) zwischen einer ersten Winkelposition, die während der Weiterleitung des verformten Rohrs das Halten des Schneidblattes (21, 22) zurückgezogen in Bezug zum verformten Rohr ermöglicht, und einer zweiten Winkelposition zu verschieben, die das Schneiden des verformten Rohrs ermöglicht, und in der die beiden Klemmelemente (12a, 12b) voneinander und von der Längsebene entfernt sind, um sich von einem Rohr während der Entnahme aus der Rohrplatte zu lösen.

5. System nach Anspruch 4, bei dem die ersten Antriebsmittel (28, 30) von einem selben Betätigungselement (34, V) betätigt werden, welches vorzugsweise ein in Translation bewegliches Element (35) umfasst, das mit den ersten Antriebsmitteln durch eine Zapfenverbindung (34) verbunden ist.

6. System nach Anspruch 5, bei dem das bewegliche Element (35) des Betätigungselements (34, V) in Translation in der Zwischenlängsebene beweglich ist und sich in eine Richtung parallel zu einem für das Rohr (T) vorgesehenen Durchgang erstreckt.

7. System nach einem der Ansprüche 4 bis 6, bei dem die ersten Antriebsmittel (28, 30) Folgendes aufweisen:
- mindestens ein Achselement (30), das in Drehung in Bezug zur Tragstruktur (S) beweglich ist;
- eine erste Nocke, die drehfest mit dem Achselement verbunden ist und es ermöglicht, das Schneidblatt (21, 22) in Translation anzutreiben; und
- eine zweite Nocke, die drehfest mit dem Achselement verbunden ist und vom Betätigungselement (34, V) betätigt wird.

8. System nach Anspruch 7, bei dem das mindestens eine bewegliche Achselement (30) zwei Achselemente umfasst, die jeweils eine Lasche (32, 33) aufweisen, die jeweils um eine gemeinsame Achse (34), die vom Betätigungselement (V) in Translation verschiebbar ist, angelenkt sind.

9. System nach einem der Ansprüche 4 bis 8, bei dem die ersten Antriebsmittel zwei angelenkte Arme (30a, 30b) umfassen, die jeweils eines der beiden Klemmelemente (12a, 12b) tragen, wobei jeder der beiden angelenkten Arme drehfest mit einem hohlen Achselement (30) verbunden ist, das um eine Übertragungswelle (40) schwenkt, um eine Drehbewegung auf das entsprechende Klemmelement zu übertragen.

10. System nach einem der Ansprüche 4 bis 9, bei dem die zweite Station einen Scherblock (20) umfasst, der Folgendes aufweist:
- eine Gleitschienenvorrichtung (23), die senkrecht auf die Längsebene angeordnet ist; und
- zwei Schneidblätter (21, 22), die in Translation von der Gleitschienenvorrichtung (23) geführt werden.

11. System nach Anspruch 10, bei dem die ersten Antriebsmittel (28, 30) zwei Finger (28) aufweisen, die jeweils dazu vorgesehen sind, mit einer beweglichen Schneidblattstütze (29) mit einem jeweiligen Schneidblatt (21, 22) in Eingriff zu stehen, wobei sich der Finger (28) durch eine Öffnung (29a) der Schneidblattstütze hindurch erstreckt, wobei jeder der Finger ermöglicht, das entsprechende Schneidblatt in Abhängigkeit von der Winkelposition der ersten Antriebsmittel (28, 30) anzutreiben.
